# EUROPÄISCHE PATENTSCHRIFT

(11) **EP 3 101 403 B1**
(45) Veröffentlichungstag und Bekanntmachung des Hinweises auf die Patenterteilung: **13.09.2017**
(21) Anmeldenummer: 16165031.2
(22) Anmeldetag: 13.04.2016
(51) Int. Cl.: G01M 3/16, G01M 3/18, F16L 59/14

(54) **ÜBERWACHUNGSSYSTEM ZUM FESTSTELLEN VON FEHLERSTELLEN IN ROHRLEITUNGEN**
MONITORING SYSTEM FOR THE DETECTION OF FAULTS IN PIPELINES
SYSTEME DE SURVEILLANCE DESTINE A DETERMINER DES ERREURS DANS DES CONDUITES

(30) Priorität: 24.04.2015 AT 500722015
(43) Veröffentlichungstag der Anmeldung: 07.12.2016
(73) Patentinhaber: Wundara GmbH, 8544 Pölfing Brunn (AT)
(72) Erfinder: WUNDARA, Johann Alois, 8552 Eibiswald (AT); WUNDARA, Johann Günther, 8552 Eibiswald (AT)
(74) Vertreter: Schwarz & Partner Patentanwälte OG

(56) Entgegenhaltungen:
- EP-A2- 1 031 826
- DE-A1- 4 003 788
- US-A1- 2009 277 252

## Beschreibung

Die Erfindung betrifft ein Überwachungssystem zum Bestimmen des Ortes eines Rohrbruchs einer mit einem Transportmedium gefüllten Rohrleitung, die ein äußeres Kunststoffrohr mit einem von Isolationsmaterial umgebenen inneren Metallrohr umfasst, wobei in dem Isolationsmaterial zumindest eine erste Messleitung und eine zweite Messleitung vorgesehen sind und, wobei das Überwachungssystem eine Messeinrichtung aufweist, die mit einem ersten Ende der ersten Messleitung und einem ersten Ende der zweiten Messleitung verbunden und durch Anlegen einer Versorgungsspannung und Messen einer Messspannung an den Messleitungen zum Bestimmen des Ortes des Rohrbruchs der Rohrleitung ausgebildet ist. So ein Rohrbruch bildet eine Fehlerstelle und kann sowohl in der mit dem Transportmedium gefüllten Rohrleitung, beziehungsweise dem Mediumrohr, als auch in dem äußeren Kunststoffrohr, beziehungsweise dem Mantelrohr, auftreten.

Das Dokument EP 1 031 826 A2 offenbart ein Verfahren zur Bestimmung des Ortes eines Rohrbruchs einer mit einem Transportmedium gefüllten Rohrleitung, mittels entlang der Rohrleitung verlegten Messleitungen. Hierbei werden zwei Messleitungen auf der Basis von Widerstandsdrähten in das Isolationsmaterial zwischen dem das Medium fassende inneren Metallrohr und dem äußeren Kunststoffrohr eingebracht. Derartige Rohrleitungen kommen zum Beispiel in Fernwärme-Rohrleitungssystemen zum Einsatz. Tritt in einem derartigen oder ähnlichen Rohrleitungssystem ein Rohrbruch auf, so muss dieser zeitnah identifiziert und der Ort des Rohrbruchs lokalisiert werden.

Dem Fachmann ist weiters bekannt, dass sich zur Bestimmung des Ortes eines Rohrbruchs am Ende einer jeden Messleitung eine geerdete Diode in Sperrrichtung befinde muss, mit deren Hilfe und durch Anlegen entsprechender Versorgungsspannungen und Messen zugehöriger Messspannungen an den jeweiligen Messleitungen, das Auftreten eines Rohrbuchs und/oder das Auftreten eines Drahtbruchs detektiert werden kann.
Tritt zum Beispiel, durch eine Beschädigung des Kunststoffrohrs und/oder des Metallrohrs, Feuchtigkeit von außen beziehungsweise von innen in den Isolationsraum ein, bildet sich zwischen der Messleitung und dem geerdeten Metallrohr eine elektrisch leitende Verbindung aus, die mittels einer Messeinrichtung detektiert werden kann.
Wird ein Defekt (Isolationsfehler, Drahtbruch, Rohrbruch) detektiert, werden, durch Anlegen einer Versorgungsspannung an einer der Messleitungen, die sich einstellenden Messspannungen zwischen dem ersten und zweiten Ende der Messleitung sowie zischen dem ersten Ende der Messleitung und dem Metallrohr ermittelt. Im Fall eines Rohrbruchs, wird aus den gemessenen Werten über den, sich am Rohrbruch einstellenden, Spannungsteiler, und unter Zuhilfenahme der Längen von Messleitung und Metallrohr, der Ort des Rohrbruchs ermittelt.

Bei dem bekannten Verfahren hat sich als Nachteil erwiesen, dass ein dauerhaftes Überwachen und zeitnahes Identifizieren eines möglichen Drahtbruchs und/oder eines Rohrbuchs, sowie des dazugehörigen Ortes, nicht kombiniert, automatisiert und dauerhaft durchgeführt werden kann, und daher extrem Zeit- und Ressourcen-intensiv ist.

Die Dokumente DE4003788A1 und US2009/0277252A1 offenbaren weitere aus dem Stand der Technik bekannte Vorrichtungen zur Leckdetektion und zur Detektion eines Drahtbruchs.

Der Erfindung liegt die Aufgabe zugrunde ein Überwachungssystem zum Feststellen von Fehlerstellen zu schaffen, bei dem die vorstehenden Nachteile nicht auftreten, und bei dem die Rohrleitung vollautomatisiert überwacht, und etwaig auftretende Defekte (Isolationsfehler, Drahtbruch, Rohrbruch) zeitnah identifiziert und lokalisiert werden können.

Erfindungsgemäß wird diese Aufgabestellung dadurch gelöst, dass ein Endumschalter an einem zweiten Ende der ersten Messleitung und an einem zweiten Ende der zweiten Messleitung angeschlossen und von der Messeinrichtung gesteuert zwischen einer ersten Schalterstellung und einer zweiten Schalterstellung umschaltbar ist, wobei die zweiten Enden der Messleitungen in der ersten Schalterstellung zum Bestimmen des Ortes des Rohrbruchs verbunden sind und, wobei jedes der zweiten Enden der Messleitungen in der zweiten Schalterstellung über eine in Sperrrichtung gepolte Diode mit dem inneren Metallrohr beziehungsweise Erdpotential verbunden ist.

Hierdurch ist der Vorteil erhalten, dass eine Rohrleitung in wählbaren Intervallen dauerhaft und regelmäßig auf das Auftreten eines Drahtbruchs und/oder eines Rohrbuchs hin überprüft wird. Im tatsächlichen Falle des Auftretens eines Rohrbruchs wird dann - wiederum über die Messeinrichtung gesteuert - der Ort des Rohrbruchs lokalisiert. Konsequenterweise kann der Rohrbruch nachfolgend zeitnah und Ressourcen-schonend behoben werden.

Ein weiterer Vorteil des Überwachungssystems besteht darin, dass sehr lange Rohrleitungen bzw. alle Rohrleitungen eines weitverzweigten und ausgedehnten Rohrleitungs-Systems - wie zum Beispiel im Fall eines Fernwärme-Rohrleitungssystem - ebenfalls vollautomatisiert überwacht werden können. Das erfindungsgemäße Überwachungssystem sieht bei solchen Rohrleitungssystemen vor, zwischen Messeinrichtung und Endumschalter (auch: "Connection Endswitch") zumindest einen Zwischenumschalter (auch "Connection Sideswitch") in die Messleitungen zu schalten, der ebenfalls von der Messeinrichtung gesteuert umschaltbar ist. Dabei verfügt der Zwischenumschalter grundsätzlich über dieselben technischen Möglichkeiten wie der Endumschalter, mit der zusätzlichen Option, die ihm nachfolgenden Messleitungen vom ihm vorangehenden Teil des Überwachungssystems frei zu schalten. Je Umschalteinheit können bis zu vier Drähte angeschlossen und überwacht werden. Diese werden bei Fernwärmerohren von den Rohrleitungen der Zuleitungen (auch: "Vorlauf (VL)") beziehungsweise den Rohrleitungen der Ableitungen (auch: "Rücklauf (RL)") zur Verfügung gestellt.

Das Vorsehen eines Zwischenumschalters hat den Vorteil, dass die zu messende Länge der Rohrleitung reduziert wird, was wiederum die Ungenauigkeit der Bestimmung des Ortes des Rohrbruchs - in diesem Fall die Entfernung des Rohrbruchs zur Messeinrichtung - reduziert. Dies ergibt sich daraus, da die absolute Größe der Ungenauigkeit der Bestimmung des Ortes des Rohrbruchs von der Gesamtlänge der Rohrleitung abhängt, und bei konstantem Verhältnis in etwa linear mit steigender Gesamtlänge zunimmt.

Im konkreten Fall eines Fernwärme-Rohrleitungssystems bietet die Erfindung den Vorteil, dass die Rohrleitung vom Heizkraftwerk zu einem einzelnen Hausanschluss messtechnisch isoliert werden kann, um einen etwaigen Rohrbruch an dieser Verbindung festzustellen und zu lokalisieren. Das Überwachungssystem erlaubt, die Rohrleitungen der Zuleitungen wie auch die Rohrleitungen der Ableitungen, vollautomatisiert zu überwachen, und jede der vorhandenen Messleitungen als Steuerungsmittel zu verwenden. Darüber hinaus kann eine beliebige Anzahl von Anschlusseinheiten, zum Beispiel in jedem Haus, installiert werden, die den Anschluss eines Messgerätes und/oder weiterer Messleitungen an die Messleitungen des Überwachungssystems erlauben.

Weitere vorteilhafte Ausgestaltungen des erfindungsgemäßen Überwachungssystems werden im Folgenden anhand der Figuren näher erläutert.
Figur 1 zeigt schematisch einen Querschnitt einer Rohrleitung, wobei zwei Messleitungen in ein Isolationsmaterial zwischen einem innerem Metallrohr und einem äußeren Kunststoffrohr eingebracht sind.
Figur 2 zeigt ein Schema und Blockschaltbild eines Überwachungssystems zum Feststellen eines Rohrbruchs gemäß einem ersten Ausführungsbeispiel der Erfindung.
Figur 3 zeigt ein Schema und Blockschaltbild eines Überwachungssystems zum Feststellen eines Rohrbruchs gemäß einem ersten Ausführungsbeispiel der Erfindung.
Figur 4 zeigt ein Schema und ein Blockschaltbild eines Überwachungssystems zum Feststellen eines Rohrbruchs gemäß einem weiteren Ausführungsbeispiel der Erfindung.
Figur 5 zeigt eine Tabelle, die Widerstandswerte für einen Kupferdraht mir einem Durchmesser von 1,5 mm² in Abhängigkeit von der Drahttemperatur wiedergibt.
Figur 6 zeigt ein Blockschaltbild eines Überwachungssystems zum Feststellen eines Rohrbruchs gemäß einem weiteren Ausführungsbeispiel der Erfindung.

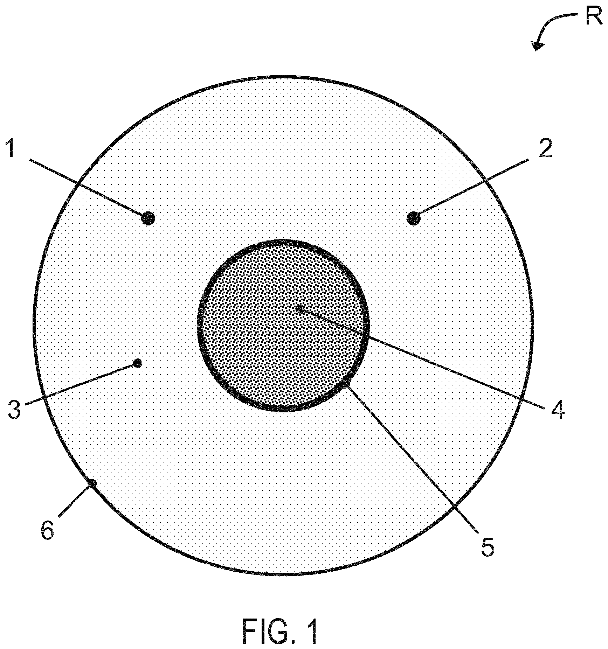

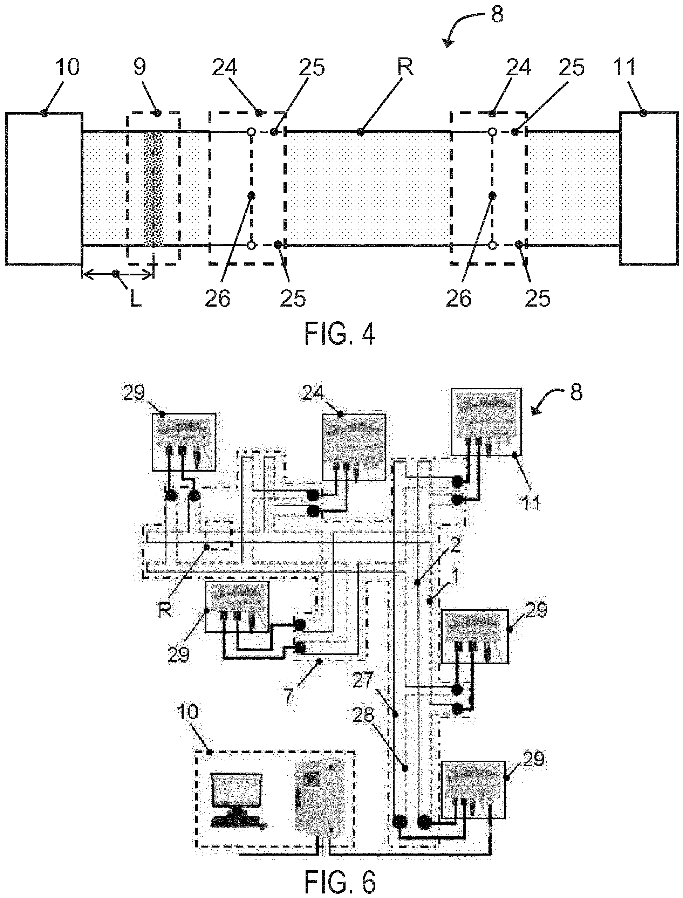

Figur 1 zeigt schematisch einen Querschnitt einer Rohrleitung R, wobei eine erste Messleitung 1 und eine zweite Messleitung 2 in ein Isolationsmaterial 3 zwischen einem, ein Transportmedium 4 fassendes, inneres Metallrohr 5 und einem äußeren Kunststoffrohr 6 eingebracht sind. Derartige Rohrleitungen R kommen zum Beispiel in Fernwärme-Rohrleitungssystemen 7 (hier in Figur 4 in einem weiteren Ausführungsbeispiel der Erfindung dargestellt) zum Einsatz.

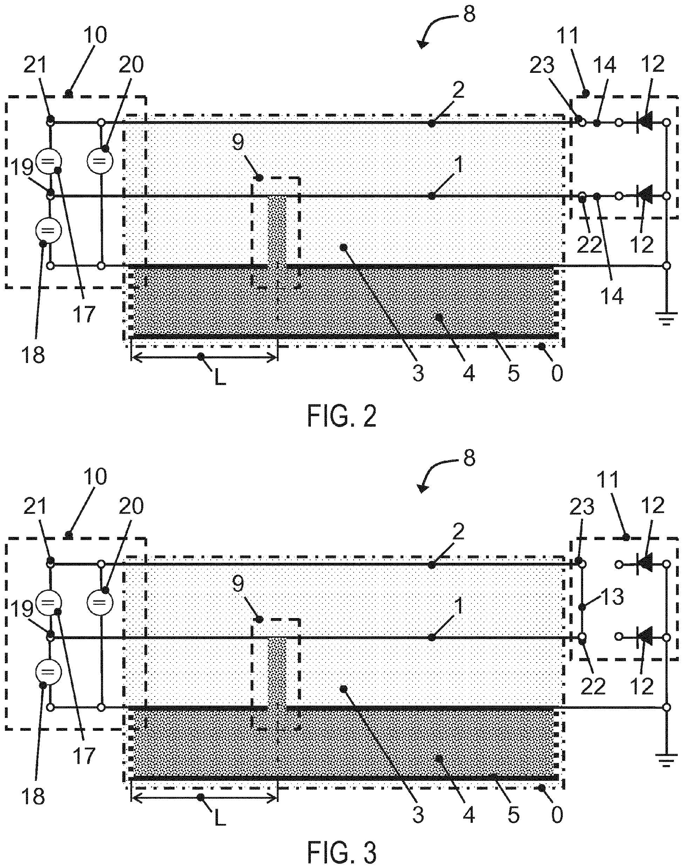

Figur 2 und 3 zeigen schematisch ein Überwachungssystem 8 gemäß einem Ausführungsbeispiel der Erfindung das derart ausgebildet ist, dass eine mit dem Transportmedium 4 gefüllte Rohrleitung R automatisch überwacht und ein etwaig auftretender Rohrbruch 9 zeitnah identifiziert und lokalisiert wird. Das Überwachungssystem 8 umfasst eine Messeinrichtung 10, die über ein zweites Ende 22 der ersten Messleitung 1 und ein zweites Ende 23 der zweiten Messleitung 2 mit einem Endumschalter 11 verbunden ist. Der Endumschalter 11 beinhaltet zwei geerdete Sperrdioden 12, wobei er in seiner ersten Schalterstellung 13 die erste Messleitung 1 an deren zweiten Ende 22 mit der zweiten Messleitung 2 an deren zweiten Ende 23 verbindet (Figur 3), und in seiner zweiten Schalterstellung 14 die erste Messleitung 1 an deren zweiten Ende 22 sowie die zweite Messleitung 2 an deren zweiten Ende 23 mit jeweils einer der Sperrdioden 12 verbindet (Figur 2). Der Endumschalter 11 ist hierbei von der Messeinrichtung 10 über die erste Messleitung 1 und/oder die zweite Messleitung 2 gesteuert.

Die Überwachung der Rohrleitung R geschieht bei der vorliegenden Erfindung insofern vorteilhaft, dass im Fall der zweiten Schalterstellung 14 des Endumschalters 11 laut Figur 2, vollautomatisch und geregelt zwischen einer die Sperrdioden 12 in Sperrrichtung ansteuernden Spannung 15, vorzugsweise einer Gleichspannung von 48 Volt, zum Feststellen des Rohrbruchs 9, und einer die Sperrdioden 12 in Durchlassrichtung ansteuernden gegenpoligen Spannung 16, zum Feststellen eines Drahtbruchs, umgeschaltet und dabei der jeweilig fließende Strom gemessen werden kann. Aus dem gemessenen Strom wird über das Ohm'sche Gesetz und die dazugehörige Berechnungsformel R = U/I, wobei R den Widerstand, I den gemessenen Strom und U die ansteuernde Spannung 15 darstellt, der Widerstand ermittelt. Eine entsprechende Detektion beruht darauf, dass zum Feststellen des Rohrbruchs 9 ein Schwellwiderstand an der ersten Messleitung 1 und/oder der zweiten Messleitung 2 unterschritten wird, und zum Feststellen eines Drahtbruchs ein Schwellwiderstand auf der Messleitung 1 und/oder der Messleitung 2 überschritten wird.

Der Rohrbruch 9 wird hierbei insofern detektiert, da durch eine Beschädigung des Kunststoffrohrs 6 und/oder des Metallrohrs 5, Feuchtigkeit von außen beziehungsweise von innen in das Isolationsmaterial 3 eintritt, und sich zwischen der ersten Messleitung 1 und/oder der zweiten Messleitung 2 und dem geerdeten Metallrohr 5 eine elektrisch leitende Verbindung ausbildet.

Um den Ort des Rohrbruchs 9 zu bestimmen, wird der Endumschalter 11 in seine erste Schalterstellung 13 gesteuert, und dadurch die erste Messleitung 1 mit der zweiten Messleitung 2 an ihren zweiten Enden 22 und 23 verbunden. Das entsprechende Blockschaltbild ist in Figur 3 dargestellt. Durch Anlegen einer Versorgungsspannung 17, vorzugsweise kleiner als 48 Volt, an der ersten Messleitung 1 und der zweiten Messleitung 2 stellen sich eine Messspannung 18 zwischen einem ersten Ende 19 der ersten Messleitung 1 und dem Metallrohr 5, sowie eine Messspannung 20 zwischen einem ersten Ende 21 der zweiten Messleitung 2 und dem Metallrohr 5 ein. Aus der Messspannung 18 und der der Messspannung 20 wird dann über den sich am Rohrbruch 9 einstellenden Spannungsteiler, und unter Zuhilfenahme der Längen der ersten Messleitung 1, der zweiten Messleitung 2 und dem Metallrohr 5, der Ort des Rohrbruchs 9, also der Abstand des Rohrbruchs 9 von der Messeinrichtung 10 ermittelt. Dieser Abstand entspricht dem Längenanteil L der Messleitung 1 von ihrem ersten Ende 19 bis zum Ort des Rohrbruchs 9 und ist proportional zu der sich einstellenden Messspannung 18. Der restliche Längenanteil vom Ort des Rohbruchs 9 zum zweiten Ende der ersten Messleitung 22, sowie die Länge der zweiten Messleitung 2 entspricht der sich einstellenden Messspannung 20. Der sich einstellende Strom kann beispielsweise 5 Ampere betragen. Die Genauigkeit dieser Distanzortung zur Bestimmung des Ortes des Rohrbruchs 9 beträgt im Wesentlichen drei Prozent der Gesamtlänge der zur Messung verwendeten Messleitungen.

Figur 4 zeigt das Überwachungssystem 8 gemäß einem weiteren Ausführungsbeispiel, bei dem entlang der mit dem Transportmedium 4 gefüllten Rohrleitung R zusätzlich zur Messeinrichtung 10 und dem Endumschalter 11 zwei Zwischenumschalter 24 vorgesehen sind, die ebenfalls jeweils von der Messeinrichtung 10 gesteuert und zwischen einer ersten Schalterstellung 25 und einer zweiten Schalterstellung 26 umschaltbar sind. Dabei verbindet jeder der Zwischenumschalter 24 in der ersten Schalterstellung 25 alle von der Messeinrichtung 10 oder einem anderen Zwischenumschalter 24 kommenden Messleitungen jeweils mit dem Endumschalter 11, und schließt in der zweiten Schalterstellung 26 zumindest zwei, von der Messeinrichtung 10 oder einem anderen Zwischenumschalter 24 kommende Messleitungen kurz.

Dies ist deshalb von entscheidendem Vorteil, da bei weit verzweigten und/oder ausgedehnten Fernwärme-Rohrleitungssystemen 7 die exakte Bestimmung des Ortes des Rohrbruchs 9 schwierig ist. Um den Ort des Rohrbruchs 9 möglichst genau zu bestimmen, werden über die Messeinrichtung 10 gesteuert, sukzessive bei jedem Zwischenumschalter 24 in der ersten Schalterstellung 25 die Messleitungen geöffnet, und das Feststellen des Rohrbruchs durchgeführt, wobei als erstes über den Endumschalter 11 getestet wird, dann über den der Messeinrichtung 10 räumlich am weitesten entfernt liegenden Zwischenumschalter 24, dann über den der Messeinrichtung 10 nächst näher gelegenen Zwischenumschalter 24, usw. Ist der der Messeinrichtung 10 am nächsten gelegenen Zwischenumschalter 24, bis zu dem der Rohrbruch 9 noch detektierbar ist, identifiziert, so wird dieser in seine zweite Schalterstellung 26 gesteuert, um den Ort des Rohrbruchs 9 zu lokalisieren. Da die Genauigkeit dieser Distanzortung zur Bestimmung des Ortes des Rohrbruchs 9 im Wesentlichen drei Prozent der Gesamtlänge der zur Messung verwendeten Messleitungen beträgt, kann so Größe des Messfehlers erheblich reduziert werden, da die Gesamtlänge der zur Messung verwendeten Messleitungen reduziert wird.

Liegt der Rohrbruch 9 beispielsweise im Bereich einer abzweigenden Zuleitung oder Ableitung zu einem Haus, wird die zugehörige Rohrleitung R durch Steuern und Schalten des entsprechenden Zwischenumschalters 24 isoliert, und so eine Identifizierung und Lokalisierung des Rohrbruchs 9 erst ermöglicht. Figur 6 zeigt hierzu ein weiteres Ausführungsbeispiel der Erfindung, wobei es das Überwachungssystem 8 im konkreten Falle eines Fernwärme-Rohrleitungssystems 7 erlaubt, die erste Messleitung 1 und die zweite Messleitung 2 der Rohrleitungen R der Zuleitungen wie auch eine dritte Messleitung 27 und eine vierte Messleitung 28 der Rohrleitungen R der Ableitungen vollautomatisiert und in wählbaren zeitlichen Intervallen - von zum Beispiel vorzugsweise 120 Sekunden - zu überwachen, und jede dieser Messleitungen als Steuerungsmittel zu verwenden. Darüber hinaus kann eine beliebige Anzahl von Anschlusseinheiten 29, zum Beispiel in jedem Haus, installiert werden, die den Anschluss eines Messgerätes und/oder zumindest zweier weiterführender Messleitungen an zumindest zwei der Messleitungen 1 bis 2 oder 27 bis 28 des Überwachungssystems 8 erlauben.

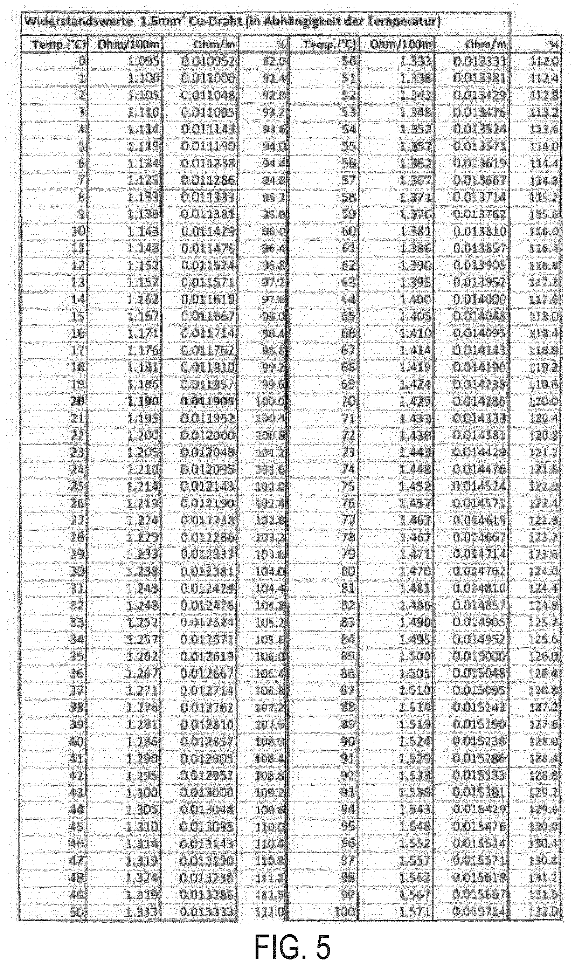

Um den Ort des Rohrbruchs exakt zu bestimmen, wird mittels einer tragbaren Messvorrichtung, beispielsweise einem Messkoffer, jeweils von beiden Seiten des vermuteten Ortes des Rohrbruchs 9, also beispielsweise von der Messeinrichtung 10 und von der der Messeinrichtung 10 am nächsten gelegenen Anschlusseinheit 29, eine Distanzortung durchgeführt. Die sich hierbei jeweils einstellenden Messspannungen 18 entsprechen jeweils dem Längenanteil L vom Ort des Rohbruchs 9 zur tragbaren Messvorrichtung. Es wird jeweils in positiver und negativer Polung der Versorgungsspannung 17 gemessen. Eine positive Polung, beziehungsweise negative Polung, der Versorgungsspannung 17 liegt vor, wenn das erste Ende 19 der ersten Messleitung 1 als Pluspol, beziehungsweise als Minuspol, und das erste Ende 21 der zweiten Messleitung 2 als Minuspol, beziehungsweise als Pluspol, ausgebildet ist. Bei positiver Polung, beziehungsweise negativer Polung, der Versorgungsspannung 17 stellt sich zwischen dem erste Ende 19 der ersten Messleitung 1 und dem Metallrohr 5 eine Spannung U1⁺, beziehungsweise eine Spannung U1⁻, ein. Die Spannung U1⁺, beziehungsweise die Spannung U1⁻, entspricht somit der Messspannung 18 bei positiver Polung, beziehungsweise negativer Polung, der Versorgungsspannung 17. Mittels der Berechnungsformel Messspannung 18 = (U1⁺ + U1⁻)/2 wird eine "Fremdspannungskorrektur" der Messspannung 18 durchgeführt. Des weiteren wird eine "Fehlerwiderstandskorrektur" der sich jeweils einstellenden Messspannungen 18 hinsichtlich des Innenwiderstands der Rohrleitung durchgeführt. Schließlich werden die sich jeweils einstellenden Messspannungen 18 bezüglich der Drahttemperatur der Messleitung 1 oder der Messleitung 2 korrigiert. Eine entsprechende Tabelle, die Widerstandswerte für einen Kupferdraht mir einem Durchmesser von 1,5 mm² in Abhängigkeit von der Drahttemperatur wiedergibt, ist in Figur 5 dargestellt.

Das Überwachungssystem 8, beziehungsweise eine damit durchgeführte Ortung im Falle eines Rohrbruchs 9, kann folgend zusammengefasst werden:
1. Drahtbruchüberwachung: Endumschalter 11 befindet sich in seiner zweiten Schalterstellung 14, die Sperrdioden 12 werden mit dem Erdpotential verbunden und die, die Sperrdioden 12 in Durchlassrichtung ansteuernde, gegenpolige Spannung 16 wird angelegt.
2. Überwachung des Isolationswiderstandes hinsichtlich des Eindringens von Feuchtigkeit, beziehungsweise eines Rohrbruchs 9: Endumschalter 11 befindet sich in seiner ersten Schalterstellung 13 und die, die Sperrdioden 12 in Sperrrichtung ansteuernde, Spannung 15 wird angelegt.
3. Vorortung der Leckstelle mit Fehlerkorrekturverfahren beziehungsweise Feststellen des Ortes des Rohrbruchs 9, laut zuvor beschriebenen Ausführungsbeispielen, mit im Wesentlichen +/- 3 Prozent Fehlergenauigkeit.
4. Leckstellenfeinortung beziehungsweise Feststellen des Ortes des Rohrbruchs 9 mit der tragbaren Messvorrichtung und Fehlerkorrekturverfahren, wobei sich ein Messtechniker an der nächstgelegenen Anschlusseinheit 29 befindet, laut zuvor beschriebenen Ausführungsbeispielen, mit im Wesentlichen +/- 1 Prozent Fehlergenauigkeit.

Es kann erwähnt werden, dass das erfindungsgemäße Überwachungssystem auch zum Überwachen von anderen Rohrleitungen genutzt werden kann. Hierbei könnten beispielsweise Rohrleitungen eines Kühlsystems oder auch einer Öl- oder Gasleitung überwacht werden. Weiters wäre es möglich in einer Rohrleitung auch mehr als nur zwei Messleitungen vorzusehen.

## Patentansprüche

1. Überwachungssystem (8) zum Bestimmen des Ortes eines Rohrbruchs (9) einer mit einem Transportmedium (4) gefüllten Rohrleitung (R), die ein äußeres Kunststoffrohr (6) mit einem von Isolationsmaterial (3) umgebenen inneren Metallrohr (5) umfasst, wobei in dem Isolationsmaterial (3) zumindest eine erste Messleitung (1) und eine zweite Messleitung (2) vorgesehen sind und, wobei das Überwachungssystem (8) eine Messeinrichtung (10) aufweist, die mit einem ersten Ende (19) der ersten Messleitung (1) und einem ersten Ende (21) der zweiten Messleitung (2) verbunden und durch Anlegen einer Versorgungsspannung (17) und Messen einer Messspannung (18, 20) an den Messleitungen (1, 2) zum Bestimmen des Ortes des Rohrbruchs (9) der Rohrleitung (R) ausgebildet ist,
**dadurch gekennzeichnet, dass**
ein Endumschalter (11) an einem zweiten Ende (22) der ersten Messleitung (1) und an einem zweiten Ende (23) der zweiten Messleitung (2) angeschlossen und von der Messeinrichtung (10) gesteuert zwischen einer ersten Schalterstellung (13) und einer zweiten Schalterstellung (14) umschaltbar ist, wobei die zweiten Enden (22, 23) der Messleitungen (1, 2) in der ersten Schalterstellung (13) zum Bestimmen des Ortes des Rohrbruchs (9) verbunden sind und, wobei jedes der zweiten Enden (22, 23) der Messleitungen (1, 2) in der zweiten Schalterstellung (14) über eine in Sperrrichtung gepolte Diode (12) mit dem inneren Metallrohr (5) beziehungsweise Erdpotential verbunden ist.

2. Überwachungssystem (8) gemäß Anspruch 1, **dadurch gekennzeichnet, dass** die Messeinrichtung (10) bei in seine zweite Schalterstellung (14) gesteuertem Endumschalter (11) zum Feststellen eines Rohrbruchs (9) zum Anlegen einer die Diode (12) in Sperrrichtung ansteuernden ersten Spannung (15) an dem ersten Ende (19, 21) der ersten Messleitung (1) und/oder zweiten Messleitung (2) und zum Feststellen eines Drahtbruchs der ersten Messleitung (1) und/oder zweiten Messleitung (2) zum Anlegen einer die Diode (12) in Durchlassrichtung ansteuernden zweiten Spannung (16) an dem ersten Ende (19, 21) der ersten Messleitung (1) und/oder zweiten Messleitung (2) ausgebildet ist.

3. Überwachungssystem (8) gemäß Anspruch 2, **dadurch gekennzeichnet, dass** die Messeinrichtung (10) bei in seine zweite Schalterstellung (14) gesteuertem Endumschalter (11) zum Feststellen eines Rohrbruchs (9) ausgebildet ist, wenn bei angelegter erster Spannung (15) ein Schwellstrom auf der ersten Messleitung (1) und/oder der zweiten Messleitung (2) überschritten wird.

4. Überwachungssystem (8) gemäß Anspruch 2, **dadurch gekennzeichnet, dass** die Messeinrichtung (10) bei in seine zweite Schalterstellung (14) gesteuertem Endumschalter (11) zum Feststellen eines Drahtbruchs ausgebildet ist, wenn bei angelegter zweiter Spannung (16) ein Schwellstrom auf der ersten Messleitung (1) und/oder der zweiten Messleitung (2) unterschritten wird.

5. Überwachungssystem (8) gemäß einem der vorherigen Ansprüche, **dadurch gekennzeichnet, dass** zwischen Messeinrichtung (10) und Endumschalter (11) zumindest ein Zwischenumschalter (24) in die erste Messleitung (1) und die zweite Messleitung (2) geschaltet vorgesehen ist, der von der Messeinrichtung (10) gesteuert zwischen einer ersten Schalterstellung (25) und einer zweiten Schalterstellung (26) umschaltbar ist, wobei in der ersten Schalterstellung (25) die erste Messleitung (1) und die zweite Messleitung (2) jeweils zwischen Messeinrichtung (10) und Endumschalter (11) verbunden sind und, wobei in der zweiten Schalterstellung (26) die von der Messeinrichtung (10) kommende erste Messleitung (1) mit der von der Messeinrichtung (10) kommenden zweiten Messleitung (2) verbunden ist.

6. Überwachungssystem (8) gemäß Anspruch 5, **dadurch gekennzeichnet, dass** die Messeinrichtung (10) bei in seine zweite Schalterstellung (14) gesteuertem Endumschalter (11) und bei in ihre erste Schalterstellung (25) gesteuerten Zwischenumschaltern (24) auf der ersten Messleitung (1) festgestelltem Rohrbruch (9) zum Steuern des von der Messeinrichtung (10) am weitesten entfernten Zwischenumschalters (24) in seine zweite Schalterstellung (26) ausgebildet ist, wobei die Messeinrichtung (10) bei erneutem Feststellen des Rohrbruchs (9) auf der ersten Messleitung (1) zum Steuern des am weitesten entfernten in seine erste Schalterstellung (25) gesteuerten Zwischenumschalters (24) in seine zweite Schalterstellung (26) ausgebildet ist.

7. Überwachungssystem (8) gemäß einem der vorherigen Ansprüche, **dadurch gekennzeichnet, dass** die Rohrleitung (R) Teil eines Fernwärme-Rohrleitungssystems (7), zum Transport des aufgeheizten Transportmediums (4) von einem Heizkraftwerk über Zuleitungen zu Häusern und zum Transport des abgekühlten Transportmediums (4) von den Häusern über Ableitungen zu dem Heizkraftwerk, ist, wobei die Messeinrichtung (10) an die erste Messleitung (1) und die zweite Messleitung (2) der Zuleitung und an eine dritte Messleitung (27) und eine vierte Messleitung (28) der Ableitung angeschlossen ist.

8. Überwachungssystem (8) gemäß Anspruch 7, **dadurch gekennzeichnet, dass** die Messeinrichtung (10) bei einem an einer der vier Messleitungen (1, 2; 27, 28) festgestellten Rohrbruch (R) zum Bestimmen des Ortes des Rohrbruchs (R), zum Auswählen einer der verbleibenden Messleitungen (1, 2; 27, 28) ausgebildet ist.

9. Überwachungssystem (8) gemäß einem der Ansprüche 7 oder 8, **dadurch gekennzeichnet, dass** in zumindest einem Haus eine Anschlusseinheit (29) an zumindest der ersten Messleitung (1) und der zweiten Messleitung (2) vorgesehen ist, an der ein externes Messgerät und/oder eine externe Messleitung an zumindest eine der vier Messleitungen anschließbar ist.

10. Überwachungssystem (8) gemäß einem der vorherigen Ansprüche, **dadurch gekennzeichnet, dass** die Messeinrichtung (10) zum regelmäßigen Überprüfen wahlweise entweder einer bestimmten Messleitung (1, 2; 27, 28) oder aller Messleitungen (1, 2; 27, 28) in wählbaren zeitlichen Intervallen, vorzugsweise in Intervallen von 120 Sekunden, ausgebildet ist.

## Claims

1. A monitoring system (8) for determining the location of a pipe burst (9) of a pipeline (R) filled with a transport medium (4), the pipeline comprising an exterior plastic pipe (6) with an interior metal pipe (5) surrounded by insulation material (3), wherein at least a first measuring line (1) and a second measuring line (2) are provided in the insulation material (3) and wherein the monitoring system (8) exhibits a measuring device (10) which is connected to a first end (19) of the first measuring line (1) and a first end (21) of the second measuring line (2) and, by applying a supply voltage (17) and measuring a measuring voltage (18, 20) on the measuring lines (1, 2), is configured for determining the location of the pipe burst (9) of the pipeline (R), **characterized in that**
a limit reversing switch (11) is connected to a second end (22) of the first measuring line (1) and to a second end (23) of the second measuring line (2) and, being controlled by the measuring device (10), is switchable between a first switch position (13) and a second switch position (14), wherein the second ends (22, 23) of the measuring lines (1, 2) in the first switch position (13) are connected for determining the location of the pipe burst (9) and wherein each of the second ends (22, 23) of the measuring lines (1, 2) in the second switch position (14) is connected via a diode (12) poled in the reverse direction to the interior metal pipe (5) or the earth potential, respectively.

2. A monitoring system (8) according to claim 1, **characterized in that**, with the limit reversing switch (11) being driven into its second switch position (14), the measuring device (10) is configured for applying a first voltage (15) actuating the diode (12) in the reverse direction to the first end (19, 21) of the first measuring line (1) and/or the second measuring line (2) for determining a pipe burst (9) and for applying a second voltage (16) actuating the diode (12) in the conducting direction to the first end (19, 21) of the first measuring line (1) and/or the second measuring line (2) for determining a wire break of the first measuring line (1) and/or the second measuring line (2).

3. A monitoring system (8) according to claim 2, **characterized in that**, with the limit reversing switch (11) being driven into its second switch position (14), the measuring device (10) is configured for determining a pipe burst (9), if a threshold current on the first measuring line (1) and/or the second measuring line (2) is exceeded, with the first voltage (15) being applied.

4. A monitoring system (8) according to claim 2, **characterized in that**, with the limit reversing switch (11) being driven into its second switch position (14), the measuring device (10) is configured for determining a wire break, if a threshold current on the first measuring line (1) and/or the second measuring line (2) is fallen short of, with the second voltage (16) being applied.

5. A monitoring system (8) according to any of the preceding claims, **characterized in that**, between the measuring device (10) and the limit reversing switch (11), at least one intermediate reversing switch (24) is provided which is switched into the first measuring line (1) and the second measuring line (2) and is switchable between a first switch position (25) and a second switch position (26) while being controlled by the measuring device (10), wherein, in the first switch position (25), the first measuring line (1) and the second measuring line (2) are connected between the measuring device (10) and the limit reversing switch (11), respectively, and wherein, in the second switch position (26), the first measuring line (1) coming from the measuring device (10) is connected to the second measuring line (2) coming from the measuring device (10).

6. A monitoring system (8) according to claim 5, **characterized in that**, with the limit reversing switch (11) being driven into its second switch position (14) and with the intermediate reversing switches (24) being driven into their first switch position (25), if a pipe burst (9) is detected on the first measuring line (1), the measuring device (10) is configured for driving the intermediate reversing switch (24), which is farthest away from the measuring device (10), into its second switch position (26), wherein, if the pipe burst (9) is again detected on the first measuring line (1), the measuring device (10) is configured for driving the intermediate reversing switch (24), which is farthest away and has been driven into its first switch position (25), into its second switch position (26).

7. A monitoring system (8) according to any of the preceding claims, **characterized in that** the pipeline (R) is part of a long-distance heating pipeline system (7) for conveying the heated transport medium (4) from a combined heat and power station via supply lines to houses and for conveying the cooled transport medium (4) from the houses via discharge lines to the combined heat and power station, wherein the measuring device (10) is connected to the first measuring line (1) and the second measuring line (2) of the supply line and to a third measuring line (27) and a fourth measuring line (28) of the discharge line.

8. A monitoring system (8) according to claim 7, **characterized in that**, if a pipe burst (R) is detected on one of the four measuring lines (1, 2; 27, 28), the measuring device (10) is configured for selecting one of the remaining measuring lines (1, 2; 27, 28) for determining the location of the pipe burst (R).

9. A monitoring system (8) according to any of claims 7 or 8, **characterized in that**, in at least one house, a connection unit (29) is provided at least on the first measuring line (1) and the second measuring line (2), where an external measuring instrument and/or an external measuring line is/are connectable to at least one of the four measuring lines.

10. A monitoring system (8) according to any of the preceding claims, **characterized in that** the measuring device (10) is configured for regularly checking optionally either a particular measuring line (1, 2; 27, 28) or all measuring lines (1, 2; 27, 28) at selectable time intervals, preferably at intervals of 120 seconds.

## Revendications

1. Système de surveillance (8) pour déterminer l'emplacement d'une rupture de tuyau (9) d'une conduite (R) remplie d'un milieu de transport (4), qui comprend un tuyau de matière plastique externe (6) avec un tuyau métallique interne (5) entouré d'un matériau isolant (3), dans lequel au moins une première ligne de mesure (1) et une seconde ligne de mesure (2) sont disposées dans le matériau isolant (3) et dans lequel le système de surveillance (8) présente un dispositif de mesure (10), qui est connecté à une première extrémité (19) de la première ligne de mesure (1) et à une première extrémité (21) de la seconde ligne de mesure (2) et est conçu par application d'une tension d'alimentation (17) et mesure d'une tension de mesure (18, 20) sur les lignes de mesure (1, 2) pour déterminer l'emplacement de la rupture de tuyau (9) de la conduite (R),
**caractérisé en ce que :**
un inverseur de fin de course (11) est connecté à une seconde extrémité (22) de la première ligne de mesure (1) et à une seconde extrémité (23) de la seconde ligne de mesure (2) et peut être commuté par commande du dispositif de mesure (10) entre une première position de commutation (13) et une seconde position de commutation (14), dans lequel les secondes extrémités (22, 23) des lignes de mesure (1, 2) sont connectées dans la première position de commutation (13) pour déterminer l'emplacement de la rupture de tuyau (9) et dans lequel chacune des extrémités (22, 23) des lignes de mesures (1, 2) est connectée dans la seconde position de commutation (14) via une diode (12) polarisée dans le sens bloquant avec le tuyau métallique interne (5), éventuellement au potentiel de terre.

2. Système de surveillance (8) selon la revendication 1, **caractérisé en ce que** le dispositif de mesure (10) est conçu, lorsque l'inverseur de fin de course (11) est commandé dans sa seconde position de commutation (14), pour établir une rupture de tuyau (9) afin d'appliquer une première tension (15) commandant la diode (12) dans le sens bloquant à la première extrémité (19, 21) de la première ligne de mesure (1) et/ou de la seconde ligne de mesure (2) et pour établir une rupture de fil de la première ligne de mesure (1) et/ou de la seconde ligne de mesure (2) afin d'appliquer une seconde tension (16) commandant la diode (12) dans le sens passant à la première extrémité (19, 21) de la première ligne de mesure (1) et/ou de la seconde ligne de mesure (2).

3. Système de surveillance (8) selon la revendication 2, **caractérisé en ce que** le dispositif de mesure (10) est conçu, lorsque l'inverseur de fin de course (11) est commandé dans sa seconde position de commutation (14), pour établir une rupture de tuyau (9) lorsque, à l'application d'une première tension (15), on passe au-dessus d'un courant de seuil sur la première ligne de mesure (1) et/ou sur la seconde ligne de mesure (2).

4. Système de surveillance (8) selon la revendication 2, **caractérisé en ce que** le dispositif de mesure (10) est conçu, lorsque l'inverseur de fin de course (11) est commandé dans sa seconde position de commutation, pour établir une rupture de fil lorsque, à l'application d'une seconde tension (16), on passe en dessous d'un courant de seuil sur la première ligne de mesure (1) et/ou sur la seconde ligne de mesure (2).

5. Système de surveillance (8) selon l'une quelconque des revendications précédentes, **caractérisé en ce qu'**il est prévu, commuté entre le dispositif de mesure (10) et l'inverseur de fin de course (11), au moins un inverseur intermédiaire (24) dans la première ligne de mesure (1) et la seconde ligne de mesure (2), qui peut être commuté sur commande du dispositif de mesure (10) entre une première position de commutation (25) et une seconde position de commutation (26), dans lequel, dans la première position de commutation (25), la première ligne de mesure (1) et la seconde ligne de mesure (2) sont connectées respectivement entre le dispositif de mesure (10) et l'inverseur de fin de course (11) et dans lequel, dans la seconde position de commutation (26), la première ligne de mesure (1) venant du dispositif de mesure (10) est connectée à la seconde ligne de mesure (2) venant du dispositif de mesure (10).

6. Système de surveillance (8) selon la revendication 5, **caractérisé en ce que** le dispositif de mesure (10) est conçu, lorsque l'inverseur de fin de course (11) est commandé dans sa seconde position de commutation (14) et que les inverseurs intermédiaires (24) sont commandés dans leur première position de commutation (25) lors d'une rupture de tuyau (9) établie sur la première ligne de mesure (1) pour commander l'inverseur intermédiaire (24) le plus largement éloigné du dispositif de mesure (10) dans sa seconde position de commutation (26), dans lequel le dispositif de mesure (10), lorsqu'est nouvellement établie une rupture de tuyau (9) sur la première ligne de mesure (1), est conçu pour commander l'inverseur intermédiaire (24) le plus largement éloigné commandé dans sa première position de commutation (25) dans sa seconde position de commutation (26).

7. Système de surveillance (8) selon l'une quelconque des revendications précédentes, **caractérisé en ce que** la conduite (R) fait partie d'un système de conduites de chauffage à distance (7) pour transporter le milieu de transport chauffé (4) d'une centrale thermique à des bâtiments via des canalisations et transporter le milieu de transport refroidi (4) des bâtiments à la centrale thermique vis des dérivations, dans lequel le dispositif de mesure (10) est connecté à la première ligne de mesure (1) et à la deuxième ligne de mesure de la conduite et à une troisième ligne de mesure (27) et à une quatrième ligne de mesure (28) de la dérivation.

8. Système de surveillance (8) selon la revendication 7, **caractérisé en ce que** le dispositif de mesure (10) est conçu, lors d'une rupture de tuyau (R) établie sur l'une des quatre lignes de mesure (1, 2 ; 27, 28), pour déterminer l'emplacement de la rupture de tuyau (R) afin de choisir l'une des lignes de mesure restantes (1, 2 ; 27, 28).

9. Système de surveillance (8) selon l'une quelconque des revendications 7 ou 8, **caractérisé en ce qu'**il est prévu dans au moins un bâtiment sur au moins la première ligne de mesure (1) et la deuxième ligne de mesure (29) une unité de connexion (29) sur laquelle peut ou peuvent être connectés un appareil de mesure externe et/ou une ligne de mesure externe à au moins l'une des quatre lignes de mesure.

10. Système de surveillance (8) selon l'une quelconque des revendications précédentes, **caractérisé en ce que** le dispositif de mesure (10) est conçu pour contrôler régulièrement au choix une ligne de mesure déterminée (1, 2 ; 27, 28) ou toutes les lignes de mesure (1, 2 ; 27, 28) à intervalles de temps sélectionnables, de préférence à intervalles de 120 secondes.
